# EUROPEAN PATENT APPLICATION

(11) **EP 4 664 114 A1**
(43) Date of publication of application: **17.12.2025**
(21) Application number: 25155628.8
(22) Date of filing: 03.02.2025
(51) Int. Cl.: G01P 15/125, G01P 15/097, G01P 1/00, G01P 1/02, G01P 15/08

(54) **SENSOR AND ELECTRONIC DEVICE**

(30) Priority: 13.06.2024 JP 2024096157
(71) Applicant: Kabushiki Kaisha Toshiba, Minato-ku Tokyo (JP)
(72) Inventor: MASUNISHI, Kei, Tokyo (JP); OGAWA, Etsuji, Tokyo (JP); TOMIZAWA, Yasushi, Tokyo (JP); UCHIDA, Kengo, Tokyo (JP); ISHIBASHI, Fumitaka, Tokyo (JP); ONO, Daiki, Tokyo (JP); MIYAZAKI, Fumito, Tokyo (JP); MURASE, Hideaki, Tokyo (JP); OGAWA, Jumpei, Tokyo (JP)
(74) Representative: Marks & Clerk LLP

(57) **Abstract**

According to one embodiment, a sensor includes a mounting member, a sensor section, and a fixing member. The mounting member includes a first mounting portion. The sensor section includes a sensor base and a first sensor part. The sensor base includes a first region, a second region, and a first end. The first region is between the second region and the first end. The first sensor part includes a first support portion fixed to the first region, a first movable portion supported by the first support portion, and a first fixed electrode fixed to the first region. A first gap is provided between the first region and the first movable portion. The fixing member fixes the second region to the first mounting portion. The first end is a free end.

## Description

### FIELD

Embodiments described herein relate generally to a sensor and an electronic device.

### BACKGROUND

For example, there is a sensor using a MEMS structure. It is desired to improve the characteristics of the sensor.

### BRIEF DESCRIPTION OF THE DRAWINGS

FIGS. 1A and 1B are schematic views illustrating a sensor according to a first embodiment;
FIGS. 2A and 2B are schematic plan views illustrating a part of the sensor according to the first embodiment;
FIGS. 3A to 3C are schematic cross-sectional views illustrating a part of the sensor according to the first embodiment;
FIG. 4 is a schematic plan view illustrating a sensor according to the first embodiment;
FIG. 5 is a schematic plan view illustrating a sensor according to the first embodiment;
FIG. 6 is a schematic plan view illustrating a sensor according to the first embodiment;
FIG. 7 is a schematic plan view illustrating a sensor according to the first embodiment;
FIGS. 8 and 9 are schematic plan views illustrating a part of the sensor according to the first embodiment;
FIGS. 10A to 10D are schematic cross-sectional views illustrating a part of the sensor according to the first embodiment;
FIG. 11 is a schematic plan view illustrating a sensor according to the first embodiment;
FIG. 12 is a schematic plan view illustrating a sensor according to the first embodiment;
FIGS. 13A and 13B are schematic cross-sectional views illustrating the sensor according to the first embodiment;
FIG. 14 is a schematic plan view illustrating a sensor according to the first embodiment;
FIGS. 15A and 15B are schematic plan views illustrating a part of the sensor according to the first embodiment;
FIGS. 16A and 16B are schematic cross-sectional views illustrating a part of the sensor according to the first embodiment;
FIG. 17 is a schematic cross-section illustrating a sensor according to the first embodiment;
FIG. 18 is a schematic cross-sectional view illustrating a sensor according to the first embodiment;
FIG. 19 is a schematic diagram illustrating an electronic device according to a second embodiment;
FIGS. 20A to 20H are schematic diagrams illustrating applications of the electronic device according to the embodiment; and
FIGS. 21A and 21B are schematic diagrams illustrating applications of the sensor according to the embodiment.

### DETAILED DESCRIPTION

According to one embodiment, a sensor includes a mounting member, a sensor section, and a fixing member. The mounting member includes a first mounting portion. The sensor section includes a sensor base and a first sensor part. The sensor base includes a first region, a second region, and a first end. The first region is between the second region and the first end. The first sensor part includes a first support portion fixed to the first region, a first movable portion supported by the first support portion, and a first fixed electrode fixed to the first region. A first gap is provided between the first region and the first movable portion. The fixing member fixes the second region to the first mounting portion. The first end is a free end.

Various embodiments are described below with reference to the accompanying drawings.

The drawings are schematic and conceptual; and the relationships between the thickness and width of portions, the proportions of sizes among portions, etc., are not necessarily the same as the actual values. The dimensions and proportions may be illustrated differently among drawings, even for identical portions.

In the specification and drawings, components similar to those described previously or illustrated in an antecedent drawing are marked with like reference numerals, and a detailed description is omitted as appropriate.

### (First Embodiment)

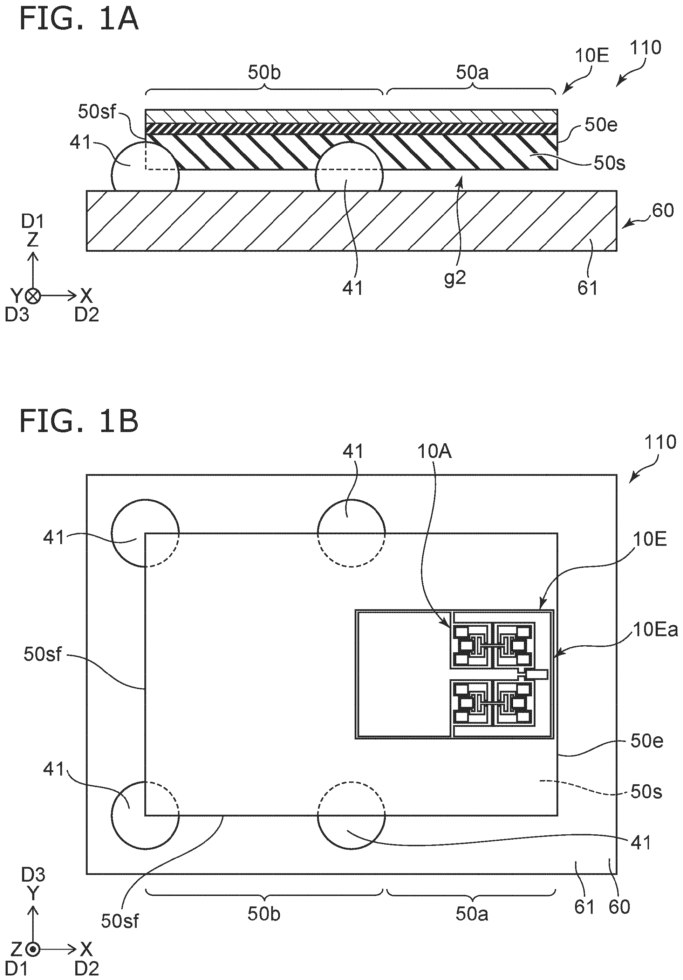

FIGS. 1A and 1B are schematic views illustrating a sensor according to the first embodiment.

FIG. 1A is a side view. FIG. 1B is a plan view.

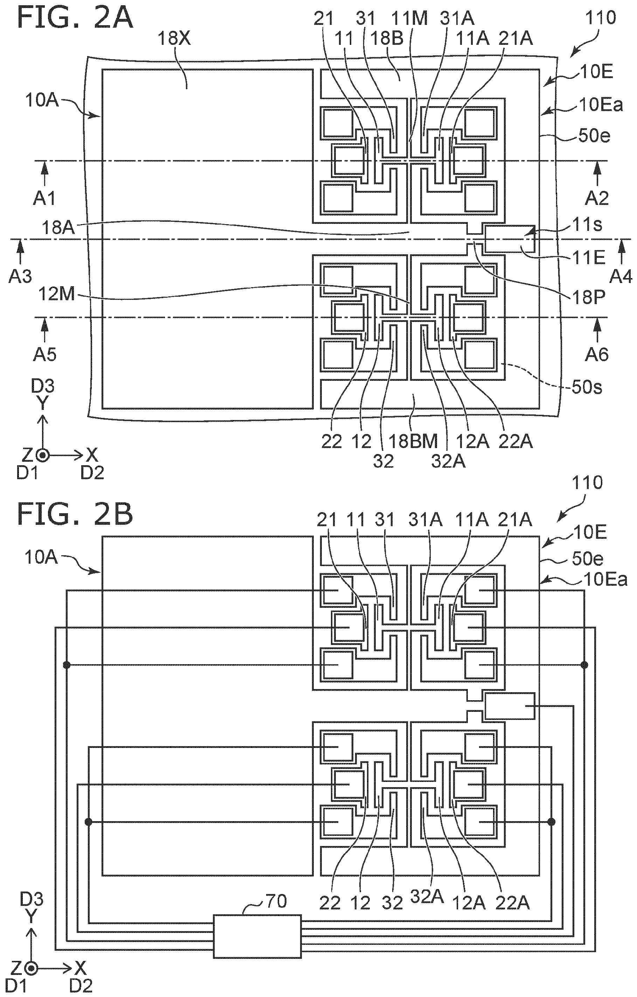

FIGS. 2A and 2B are schematic plan views illustrating a part of the sensor according to the first embodiment.

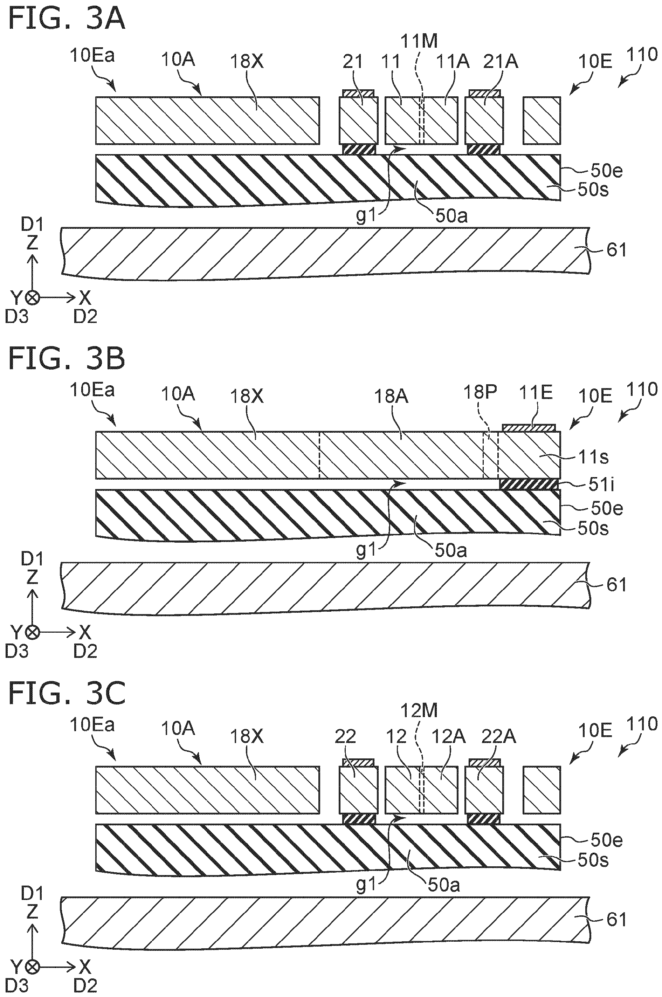

FIGS. 3A to 3C are schematic cross-sectional views illustrating a part of the sensor according to the first embodiment.

FIG. 3A is a cross-sectional view taken along the line A1-A2 in FIG. 2. FIG. 3B is a cross-sectional view taken along the line A3-A4 in FIG. 2. FIG. 3C is a cross-sectional view taken along the line A5-A6 in FIG. 2.

As shown in FIGS. 1A and 1B, a sensor 110 according to the embodiment includes a mounting member 60, a sensor section 10E, and a fixing member 41. The mounting member 60 includes a first mounting portion 61.

As shown in FIGS. 1A, 2A, and 3A to 3C, the sensor section 10E includes a sensor base 50s and a first sensor part 10Ea. The sensor base 50s includes a first region 50a, a second region 50b, and a first end 50e. The first region 50a is located between the second region 50b and the first end 50e.

The first sensor part 10Ea includes a first support portion 11s, a first movable portion 10A, and a first fixed electrode 21. The first support portion 11s is fixed to the first region 50a. The first movable portion 10A is supported by the first support portion 11s. The first fixed electrode 21 is fixed to the first region 50a. A first gap g1 is provided between the first region 50a and the first movable portion 10A. A first intermediate layer 51i may be provided between the first region 50a and the first support portion 11s. The first intermediate layer 51i may be an insulating layer.

As shown in FIGS. 1A and 1B, the fixing member 41 fixes the second region 50b to the first mounting portion 61. In the embodiment, the first end 50e is a free end. For example, a second gap g2 is provided between the first mounting portion 61 and the first region 50a. For example, the second gap g2 is provided between the first mounting portion 61 and the first end 50e.

For example, a part of the first movable portion 10A may function as a movable electrode. A detection signal generated between the movable electrode and the first fixed electrode 21 changes according to the acceleration applied to the sensor section 10E. The acceleration can be detected by detecting the detection signal or a signal according to the detection signal.

When a temperature change occurs in the sensor 110, stress may occur in the sensor section 10E due to differences in thermal expansion coefficients, etc. For example, in a reference example, the entire sensor base 50s is fixed to the first mounting portion 61 by the fixing member 41. In the reference example, stress (thermal stress) due to temperature changes is likely to occur in the sensor section 10E. Thermal stress affects the detection signal. In the reference example, it is difficult to obtain sufficiently high detection accuracy.

In contrast, in the embodiment, the second region 50b of the sensor base 50s is fixed to the first mounting portion 61 by the fixing member 41. On the other hand, the first region 50a where the sensor section 10E is provided is not fixed to the first mounting portion 61. Because the first end 50e is a free end, the first end 50e can be freely displaced in response to temperature changes. For example, the first region 50a can also be freely displaced in response to temperature changes. For example, thermal stress in the sensor section 10E is suppressed. In the embodiment, the influences of temperature changes can be suppressed. According to the embodiment, a sensor capable of improving performance is provided.

As shown in FIG 3B, a direction from the first region 50a to the first support portion 11s is defined as a first direction D1. As shown in FIG. 1A, a direction from the first region 50a to the first end 50e is defined as a second direction D2. The second direction D2 crosses the first direction D1.

The first direction D1 is defined as a Z-axis direction. One direction perpendicular to the Z-axis direction is defined as an X-axis direction. A direction perpendicular to the Z-axis direction and the X-axis direction is defined as a Y-axis direction. The second direction D2 may be, for example, the X-axis direction.

The first mounting portion 61 may be substantially along the X-Y plane. The sensor base 50s is substantially along the X-Y plane. A direction from the first mounting portion 61 to the sensor base 50s is along the first direction D1.

As shown in FIG. 2A, the first movable portion 10A may include a first movable electrode 11. For example, the first movable electrode 11 faces the first fixed electrode 21 in the second direction D2. A first signal generated between the first movable electrode 11 and the first fixed electrode 21 changes according to the acceleration applied to the sensor section 10E. The acceleration is detected by detecting a value based on the first signal.

As shown in FIG. 2A, the first movable portion 10A may further include a first movable base 18A, a second movable base 18B, and a first beam 11M. The first movable base 18A is connected to the first support portion 11s. A part of the first beam 11M is connected to the first movable base 18A. Another part of the first beam 11M is connected to the second movable base 18B. For example, the first beam 11M extends along a third direction D3. The third direction D3 crosses a plane including the first direction D1 and the second direction D2. The third direction D3 may be, for example, the Y-axis direction. The first movable electrode 11 is connected to the first beam 11M.

For example, the resonant frequency of the first beam 11M may change due to the acceleration applied to the sensor section 10E. The change in the resonant frequency may be detected by the first signal generated between the first movable electrode 11 and the first fixed electrode 21. The acceleration may be detected by detecting the change in the resonant frequency.

As shown in FIG. 2A, the first movable portion 10A may include a first movable connecting portion 18P. The first movable connecting portion 18P is provided between the first movable base 18A and the first support portion 11s. The first support portion 11s supports the first movable connecting portion 18P. The first movable connecting portion 18P supports the first movable base 18A. A length (width) of the first movable connecting portion 18P along the third direction D3 is shorter than a length (width) of the first movable base 18A along the third direction D3. For example, the first movable base 18A may be deformed (or displaced) so as to rotate in the X-Y plane around the first movable connecting portion 18P.

For example, the deformation (or displacement) of the first movable base 18A applies stress to the first beam 11M. The stress generated in the first beam 11M changes the resonant frequency of the first beam 11M. Acceleration is detected by detecting the change in resonant frequency. By providing the first movable connecting portion 18P being narrow, the deformation (displacement) of the first movable base 18A due to acceleration becomes large. High sensitivity is obtained.

As shown in FIG. 2A, the first movable portion 10A may include a first movable component 18X. The first movable component 18X is connected to a first movable base 18A. For example, in the second direction D2, the first movable base 18A is provided between the first movable component 18X and the first support portion 11s. In the second direction D2, the first movable connecting portion 18P is provided between the first movable base 18A and the first support portion 11s.

A length (width) of the first movable component 18X along the third direction D3 is longer than the length (width) of the first movable base 18A along the third direction D3. By providing the first movable component 18X, the deformation (displacement) of the first movable base 18A in response to acceleration can be made large. The first movable component 18X functions, for example, as a proof mass.

As shown in FIGS. 2A and 3C, the first sensor part 10Ea may further include a second fixed electrode 22. The second fixed electrode 22 is fixed to the first region 50a. The first movable portion 10A may further include a second movable electrode 12. The second movable electrode 12 faces the second fixed electrode 22 in the second direction D2.

The first movable portion 10A may further include a second other movable base 18BM and a second beam 12M. A part of the second beam 12M is connected to the second other movable base 18BM. Another part of the second beam 12M is connected to the first movable base 18A. The second beam 12M extends along the third direction D3. In this example, a direction from the second beam 12M to the first beam 11M is along the third direction D3.

The second movable electrode 12 is connected to the second beam 12M. For example, the first resonant frequency of the first beam 11M and the second resonant frequency of the second beam 12M change in response to the acceleration applied to the sensor section 10E. The change in the resonant frequency corresponds to, for example, a change in the stress applied to the beam.

In one state of the acceleration, when the first resonant frequency increases, the second resonant frequency decreases. In another state of the acceleration, when the first resonant frequency decreases, the second resonant frequency increases. By detecting the change in the difference between the two resonant frequencies, acceleration can be detected with higher sensitivity. Acceleration can be detected with higher accuracy. The detected acceleration includes a component in a direction crossing the first direction D1. In this example, the detected acceleration includes, for example, a component in the third direction D3.

As shown in FIG. 2A, the first sensor part 10Ea may further include a first other fixed electrode 31 and a second other fixed electrode 32. The first other fixed electrode 31 and the second other fixed electrode 32 are fixed to the first region 50a. The first other fixed electrode 31 faces the first movable electrode 11. The second other fixed electrode 32 faces the second movable electrode 12. In this example, in the second direction D2, at least a part of the first movable electrode 11 is between the first fixed electrode 21 and the first other fixed electrode 31. In the second direction D2, at least a part of the second movable electrode 12 is between the second fixed electrode 22 and the second other fixed electrode 32.

For example, an AC signal is applied between the first movable electrode 11 and the first other fixed electrode 31. This AC signal causes the first beam 11M to vibrate. A change in the first resonant frequency of the first beam 11M due to the acceleration may be detected by the first signal between the first fixed electrode 21 and the first movable electrode 11.

For example, an AC signal is applied between the second movable electrode 12 and the second other fixed electrode 32. This AC signal causes the second beam 12M to vibrate. A change in the second resonant frequency of the second beam 12M due to the acceleration may be detected by a second signal between the second fixed electrode 22 and the second movable electrode 12.

The first other fixed electrode 31 and the second other fixed electrode 32 are, for example, drive electrodes. The first fixed electrode 21 and the second fixed electrode 22 are, for example, detection electrodes.

As shown in FIG. 2A, in this example, the first sensor part 10Ea further includes a first opposing fixed electrode 21A, a second opposing fixed electrode 22A, a first opposing other fixed electrode 31A, and a second opposing other fixed electrode 32A. These fixed electrodes are fixed to the first region 50a.

As shown in FIG. 2A, in this example, the first movable portion 10A includes a first opposing movable electrode 11A and a second opposing movable electrode 12A. The first opposing fixed electrode 21A faces the first opposing movable electrode 11A in the second direction D2. The first opposing other fixed electrode 31A faces the first opposing movable electrode 11A in the second direction D2. In this example, the first opposing movable electrode 11A is between the first opposing fixed electrode 21A and the first opposing other fixed electrode 31A. The second opposing fixed electrode 22A faces the second opposing movable electrode 12A in the second direction D2. The second opposing other fixed electrode 32A faces the second opposing movable electrode 12A in the second direction D2. In this example, the second opposing movable electrode 12A is between the second opposing fixed electrode 22A and the second opposing other fixed electrode 32A.

As shown in FIG. 3B, for example, the first movable portion 10A may include a first movable portion electrode 11E. The first movable portion electrode 11E is electrically connected to the first movable electrode 11, the second movable electrode 12, the first opposing movable electrode 11A, and the second opposing movable electrode 12A.

As shown in FIG. 2B, a controller 70 may be provided. The controller 70 may be included in the sensor 110. The controller 70 may be provided separately from the sensor 110. The controller 70 may be configured to supply a drive signal (e.g., an AC signal) to, for example, the first other fixed electrode 31, the second other fixed electrode 32, the first opposing other fixed electrode 31A, and the second opposing other fixed electrode 32A.

The controller 70 may be electrically connected to, for example, the first fixed electrode 21, the second fixed electrode 22, the first opposing fixed electrode 21A, and the second opposing fixed electrode 22A. The controller 70 may be configured to detect signals between each of these fixed electrodes and the first movable portion 10A.

In the embodiment, the acceleration may be detected based on the detection result of the difference between the first resonant frequency of the first beam 11M and the second resonant frequency of the second beam 12M. As already explained, in the embodiment, for example, adverse influences due to thermal stress are suppressed. For example, stress relaxation due to creep is suppressed. For example, changes in resonant frequency caused by thermal stress are suppressed.

For example, the change in the distance between the first movable electrode 11 and the first fixed electrode 21 due to temperature change is suppressed. For example, the influence of changes in the soft spring effect due to the electrostatic spring is suppressed.

As already explained, in the embodiment, the second region 50b is fixed to the first mounting portion 61 by the fixing member 41. At least a part of the first region 50a is not fixed to the first mounting portion 61, and the first end 50e is a free end. For example, the first region 50a is deformable in response to changes in temperature. On the other hand, the second region 50b is easily deformed by stress caused by temperature changes. For example, a rate of change of a first curvature of the first region 50a in the second direction D2 with respect to temperature is defined as a first change rate. A rate of change of a second curvature of the second region 50b in the second direction D2 with respect to temperature is defined as a second change rate. For example, the first change rate is lower than the second change rate.

As shown in FIGS. 1A and 1B, a part of the fixing member 41 may be provided between the first mounting portion 61 and the second region 50b. Another part of the fixing member 41 may not overlap the second region 50b.

For example, the second region 50b includes a first side face 50sf. The first side face 50sf crosses a plane (e.g., the X-Y plane) that crosses the first direction D1. The fixing member 41 may be in contact with the first side face 50sf. High-strength fixing is possible.

The second region 50b may include a plurality of first side faces 50sf. One of the plurality of first side faces 50sf is, for example, along the X-axis direction. Another of the plurality of first side faces 50sf is, for example, along the Y-axis direction.

As shown in FIG. 1B, a plurality of fixing members 41 may be provided. A direction from one of the plurality of fixing members 41 to another one of the plurality of fixing members 41 may cross the first direction D1 and may cross the second direction D2.

A direction from one of the plurality of fixing members 41 to another one of the plurality of fixing members 41 may cross the first direction D1 and be along the second direction D2.

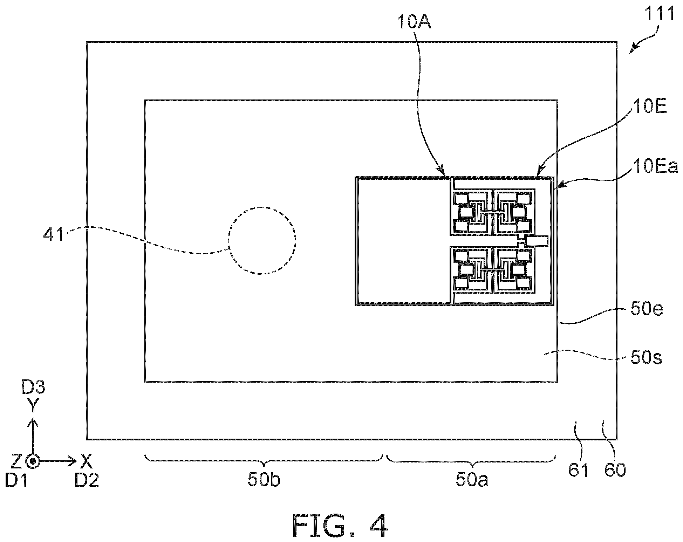

FIG. 4 is a schematic plan view illustrating a sensor according to the first embodiment.

As shown in FIG. 4, in a sensor 111 according to the embodiment, the number of the fixing member 41 is one. The fixing member 41 is provided between first mounting portion 61 and second region 50b. Except for this, the configuration of sensor 111 may be the same as the configuration of sensor 110.

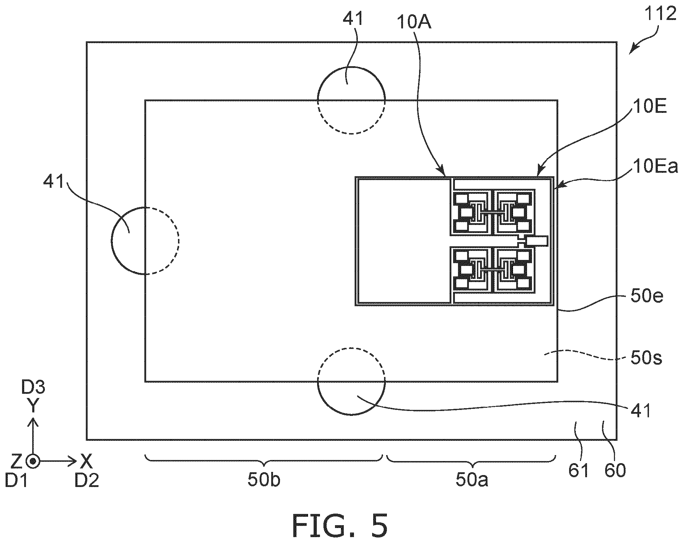

FIG. 5 is a schematic plan view illustrating a sensor according to the first embodiment.

As shown in FIG. 5, in a sensor 112 according to the embodiment, the number of fixing members 41 is three. A direction from one of the plurality of fixing members 41 to another one of the plurality of fixing members 41 may be inclined with respect to the second direction D2. Except for this, the configuration of sensor 112 may be the same as the configuration of sensor 110.

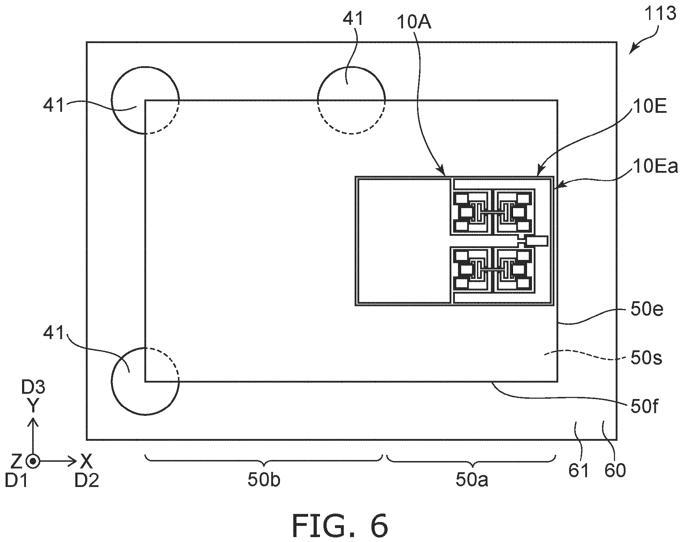

FIG. 6 is a schematic plan view illustrating a sensor according to the first embodiment.

As shown in FIG. 6, in a sensor 113 according to the embodiment, the number of fixing members 41 is three. Except for this, the configuration of sensor 113 may be the same as the configuration of sensor 110.

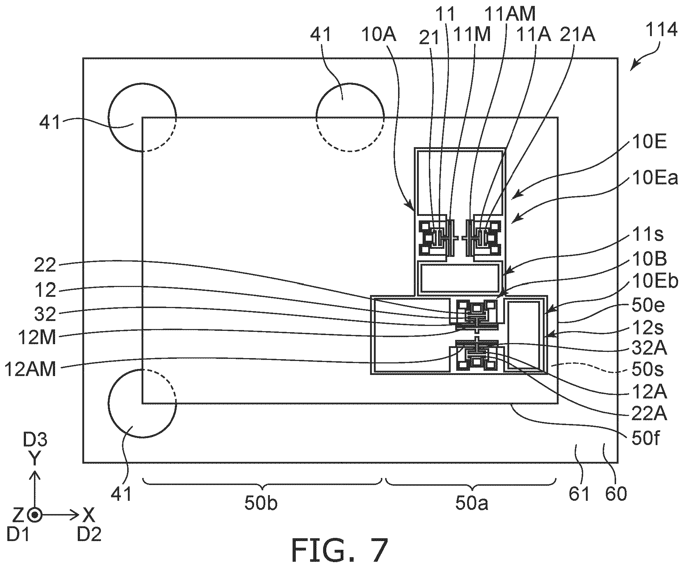

FIG. 7 is a schematic plan view illustrating a sensor according to the first embodiment.

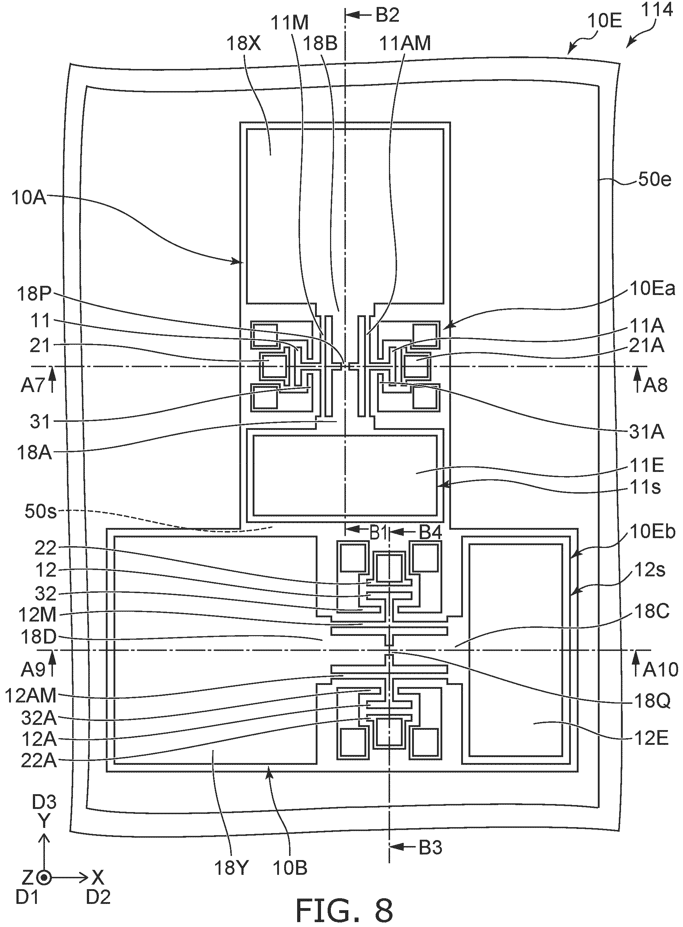

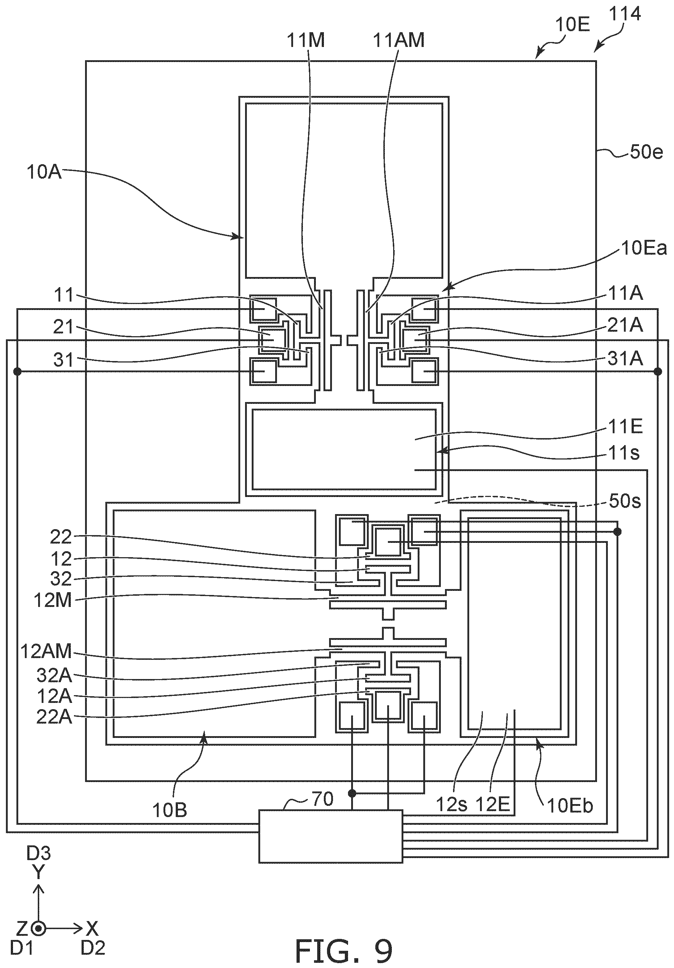

FIGS. 8 and 9 are schematic plan views illustrating a part of the sensor according to the first embodiment.

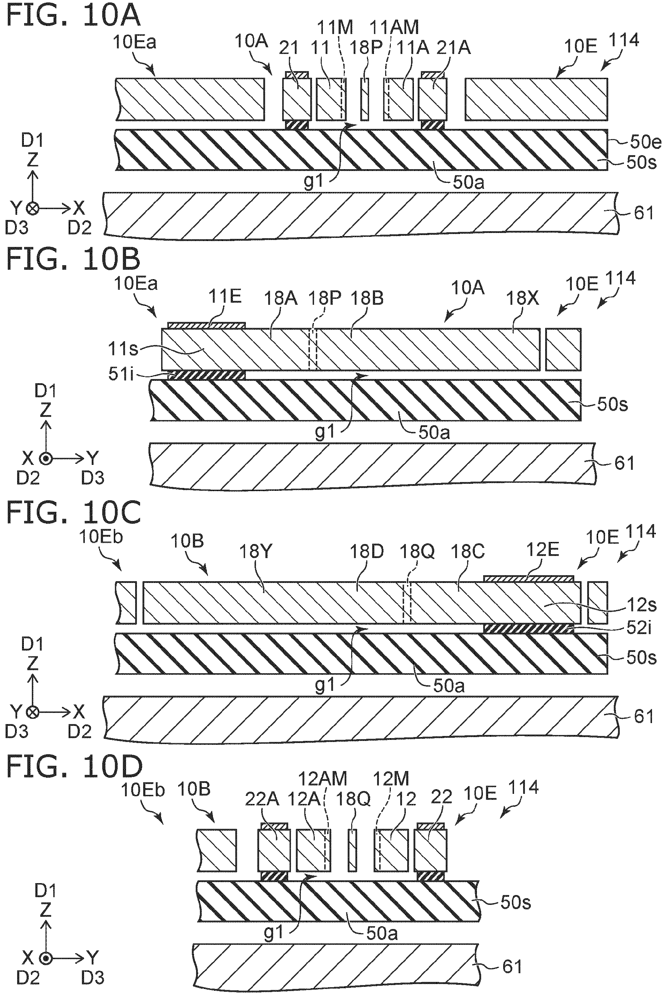

FIGS. 10A to 10D are schematic cross-sectional views illustrating a part of the sensor according to the first embodiment.

FIG. 10A is a cross-sectional view taken along the line A7-A8 in FIG. 8. FIG. 10C is a cross-sectional view taken along the line A9-A10 in FIG. 8. FIG. 10B is a cross-sectional view taken along the line B1-B2 in FIG. 8. FIG. 10D is a cross-sectional view taken along the line B3-B4 in FIG. 8.

As shown in FIG. 7, in a sensor 114 according to the embodiment, the sensor base 50s further includes a second end 50f in addition to the first end 50e. A direction from the second end 50f to the first region 50a (e.g., the third direction D3) crosses a plane including the first direction D1 and the second direction D2. The third direction D3 is, for example, along the Y-axis direction. The second end 50f is a free end. Except for this, the configuration of the sensor 114 may be the same as the configuration of the sensor 110.

In the sensor 114, the first end 50e is provided as a free end, so that the influences of thermal stress along the second direction D2 in the first region 50a can be suppressed. The second end 50f is provided as a free end, so that the influences of thermal stress along the third direction D3 in the first region 50a can be suppressed.

In the sensor 114, the sensor section 10E includes a second sensor part 10Eb in addition to the first sensor part 10Ea.

As already explained, the first sensor part 10Ea includes the first support portion 11s, the first movable portion 10A, and the first fixed electrode 21 (see FIG. 8). As shown in FIG. 10B, the first support portion 11s is fixed to the first region 50a. The first movable portion 10A is supported by the first support portion 11s. As shown in FIG. 10A, the first fixed electrode 21 is fixed to the first region 50a. The first gap g1 is provided between the first region 50a and the first movable portion 10A. The first intermediate layer 51i may be provided between the first region 50a and the first support portion 11s. The first intermediate layer 51i may be an insulating layer.

The first movable portion 10A may include the first movable electrode 11. The first movable electrode 11 faces the first fixed electrode 21 in the second direction D2. For example, the acceleration may be detected based on a value corresponding to the first signal generated between the first movable electrode 11 and the first fixed electrode 21.

As shown in FIG. 8, the second sensor part 10Eb includes a second support portion 12s, a second movable portion 10B, and a second fixed electrode 22. As shown in FIG. 10C, the second support portion 12s is fixed to the first region 50a. The second movable portion 10B is supported by the second support portion 12s. As shown in FIG. 10D, the second fixed electrode 22 is fixed to the first region 50a. A part of the first gap g1 is provided between the first region 50a and the second movable portion 10B. A second intermediate layer 52i may be provided between the first region 50a and the second support portion 12s. The second intermediate layer 52i may be an insulating layer.

The second movable portion 10B may further include the second movable electrode 12. In this example, the second movable electrode 12 faces the second fixed electrode 22 in the third direction D3. For example, the acceleration may be detected based on detection of a value corresponding to the second signal generated between the second movable electrode 12 and the second fixed electrode 22.

For example, a direction of the first acceleration component of the acceleration detected by the first sensor part 10Ea may cross a direction of the second acceleration component of the acceleration detected by the second sensor part 10Eb. For example, acceleration components along plurality of directions can be detected.

As shown in FIG. 8, in this example, the first movable portion 10A may further include the first movable base 18A, a second movable base 18B, and the first beam 11M. The first movable base 18A is connected to the first support portion 11s. A part of the first beam 11M is connected to the first movable base 18A. Another part of the first beam 11M is connected to the second movable base 18B. For example, the first beam 11M extends along the third direction D3. The first movable electrode 11 is connected to the first beam 11M.

As shown in FIG. 10A, the first sensor part 10Ea may include the first opposing fixed electrode 21A. The first opposing fixed electrode 21A is fixed to the first region 50a. The first movable portion 10A may include the first opposing movable electrode 11A and the first opposing beam 11AM. The first opposing fixed electrode 21A faces the first opposing movable electrode 11A in the second direction D2. A part of the first opposing beam 11AM is connected to the first movable base 18A. Another part of the first opposing beam 11AM is connected to the second movable base 18B. For example, the first opposing beam 11AM extends along the third direction D3. The first opposing movable electrode 11A is connected to the first opposing beam 11AM. The first movable portion 10A may further include the first movable component 18X connected to the second movable base 18B.

For example, in the first sensor part 10Ea, the difference between the first resonant frequency of the first beam 11M and a third resonant frequency of the first opposing beam 11AM may be detected. High sensitivity and high accuracy can be obtained.

As shown in FIG. 8, in this example, the second movable portion 10B may further include a third movable base 18C, a fourth movable base 18D, and the second beam 12M. The third movable base 18C is connected to the second support portion 12s. A part of the second beam 12M is connected to the third movable base 18C. Another part of the second beam 12M is connected to the fourth movable base 18D. For example, the second beam 12M extends along the second direction D2. The second movable electrode 12 is connected to the second beam 12M.

As shown in FIG. 10D, the second sensor part 10Eb may include the second opposing fixed electrode 22A. The second opposing fixed electrode 22A is fixed to the first region 50a. The second movable portion 10B may include the second opposing movable electrode 12A and the second opposing beam 12AM. The second opposing fixed electrode 22A faces the second opposing movable electrode 12A in the third direction D3. A part of the second opposing beam 12AM is connected to the third movable base 18C. Another part of the second opposing beam 12AM is connected to the fourth movable base 18D. For example, the second opposing beam 12AM extends along the second direction D2. The second opposing movable electrode 12A is connected to the second opposing beam 12AM. The second movable portion 10B may further include a second movable component 18Y connected to the fourth movable base 18D.

For example, in the second sensor part 10Eb, the difference between the second resonant frequency of the second beam 12M and a fourth resonant frequency of the second opposing beam 12AM may be detected. High sensitivity and high accuracy can be obtained.

The first movable portion 10A may include the first movable connecting portion 18P provided between the first movable base 18A and the second movable base 18B. The length of the first movable connecting portion 18P along the second direction D2 is shorter than the length of the first movable base 18A along the third direction D3.

The second movable portion 10B may include a second movable connecting portion 18Q provided between the third movable base 18C and the fourth movable base 18D. A length of the second movable connecting portion 18Q along the third direction D3 is shorter than a length of the third movable base 18C along the third direction D3.

In FIG. 7, the first sensor part 10Ea may include the first other fixed electrode 31 and the first opposing other fixed electrode 31A. The second sensor part 10Eb may include the second other fixed electrode 32 and the second opposing other fixed electrode 32A. These other fixed electrodes are fixed to the first region 50a. The first other fixed electrode 31 faces the first movable electrode 11. The second other fixed electrode 32 faces the second movable electrode 12. The first opposing other fixed electrode 31A faces the first opposing movable electrode 11A. The second opposing other fixed electrode 32A faces the second opposing movable electrode 12A.

As shown in FIG. 8, for example, the first movable portion 10A may include the first movable portion electrode 11E. The first movable portion electrode 11E is electrically connected to the first movable electrode 11 and the first opposing movable electrode 11A.

As shown in FIG. 8, for example, the second movable portion 10B may include a second movable portion electrode 12E. The second movable portion electrode 12E is electrically connected to the second movable electrode 12 and the second opposing movable electrode 12A.

As shown in FIG. 9, a controller 70 may be provided. The controller 70 may be included in the sensor 114. The controller 70 may be provided separately from the sensor 114. The controller 70 may be configured to supply a drive signal (e.g., an AC signal) to, for example, the first other fixed electrode 31, the second other fixed electrode 32, the first opposing other fixed electrode 31A, and the second opposing other fixed electrode 32A.

The controller 70 may be electrically connected to, for example, the first fixed electrode 21 and the first opposing fixed electrode 21A. The controller 70 may be configured to detect signals between each of these fixed electrodes and the first movable portion 10A. The controller 70 may be electrically connected to, for example, the second fixed electrode 22 and the second opposing fixed electrode 22A. The controller 70 may be configured to detect signals between each of these fixed electrodes and the second movable portion 10B.

As shown in FIG. 7, a direction from the first sensor part 10Ea to the first end 50e is along the second direction D2. A direction from the second sensor part 10Eb to the first end 50e is along the second direction D2. A direction from the second end 50f toward the first sensor part 10Ea is along the third direction D3. A direction from the second end 50f toward the second sensor part 10Eb is along the third direction D3.

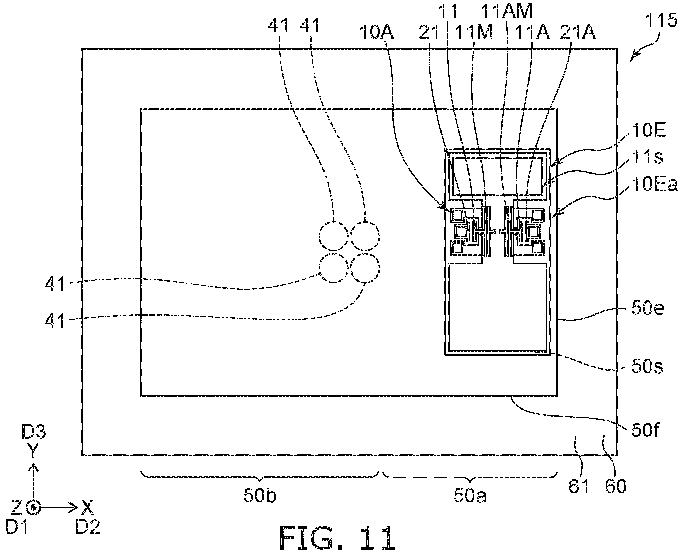

FIG. 11 is a schematic plan view illustrating a sensor according to the first embodiment.

As shown in FIG. 11, in a sensor 115 according to the embodiment, a plurality of fixing members 41 are provided. The plurality of fixing members 41 are provided between the first mounting portion 61 and the second region 50b. The first sensor part 10Ea is provided in the sensor 115. The second sensor part 10Eb is omitted in the sensor 115. Except for this, the configuration of the sensor 115 may be the same as the configuration of the sensor 110. The influence of thermal stress is also suppressed in the sensor 115. A sensor capable of improving performance is provided.

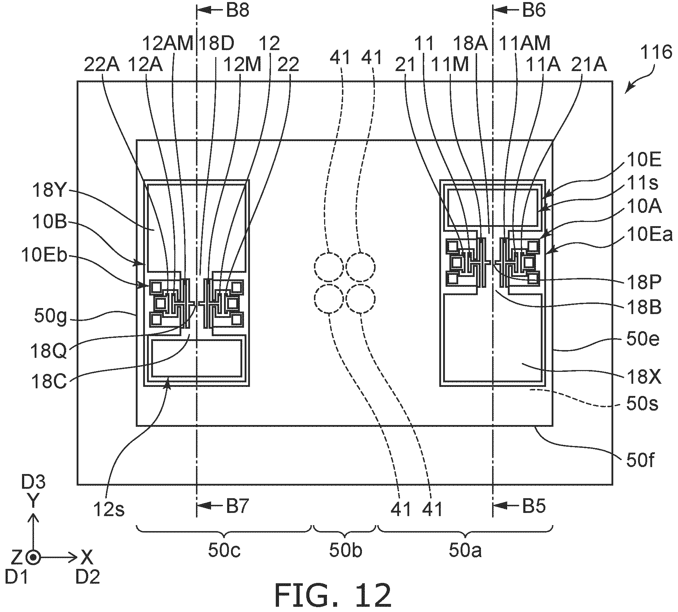

FIG. 12 is a schematic plan view illustrating a sensor according to the first embodiment.

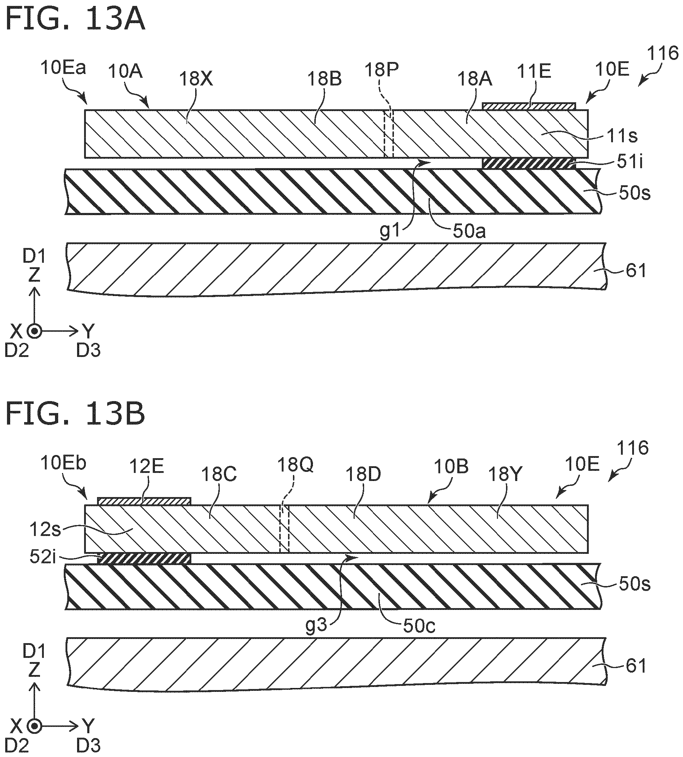

FIGS. 13A and 13B are schematic cross-sectional views illustrating the sensor according to the first embodiment.

FIG. 13A is a cross-sectional view taken along the line B5-B6 in FIG. 12. FIG. 13B is a cross-sectional view taken along the line B7-B8 in FIG. 12.

As shown in FIG. 12, in a sensor 116 according to the embodiment, the sensor base 50s further includes a third region 50c and a third end 50g. Except for this, the configuration of the sensor 116 may be the same as the configuration of the sensor 110.

The second region 50b is provided between the third region 50c and the first region 50a. A direction from the third end 50g to the third region 50c is along a direction from the first region 50a to the first end 50e. In this example, these directions are along the second direction D2. The third end 50g is a free end.

In the sensor 116, the sensor section 10E includes the second sensor part 10Eb. As shown in FIG. 12, the second sensor part 10Eb includes the second support portion 12s, the second movable portion 10B, and the second fixed electrode 22. As shown in FIG. 13B, the second support portion 12s is fixed to the third region 50c. The second movable portion 10B is supported by the second support portion 12s. As shown in FIG. 12, the second fixed electrode 22 is fixed to the third region 50c. A third gap g3 is provided between the third region 50c and the second movable portion 10B. In the sensor 116 as well, the influences of thermal stress can be suppressed. A sensor capable of improving performance is provided.

In the sensor 116, the second movable electrode 12 faces the second fixed electrode 22 in the second direction D2. The second beam 12M extends along the third direction D3.

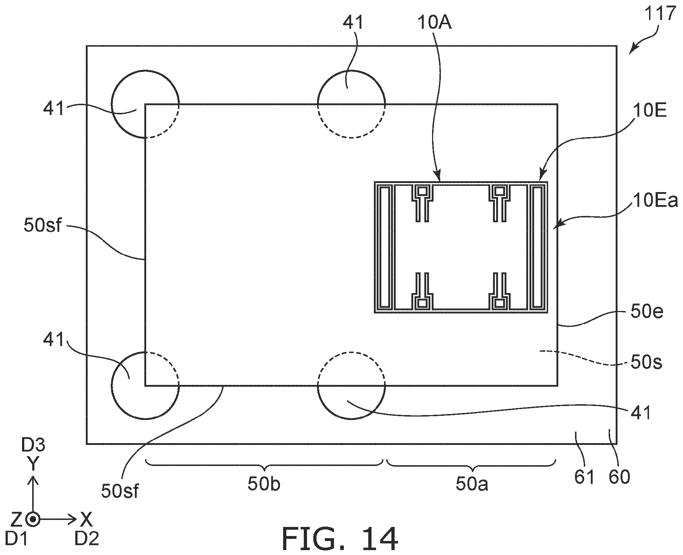

FIG. 14 is a schematic plan view illustrating a sensor according to the first embodiment.

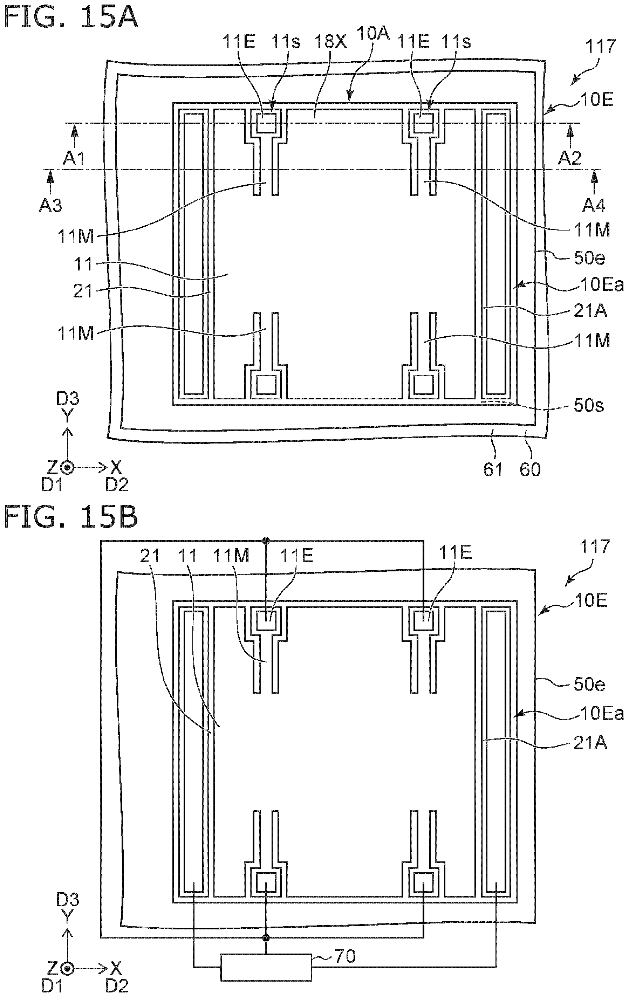

FIGS. 15A and 15B are schematic plan views illustrating a part of the sensor according to the first embodiment.

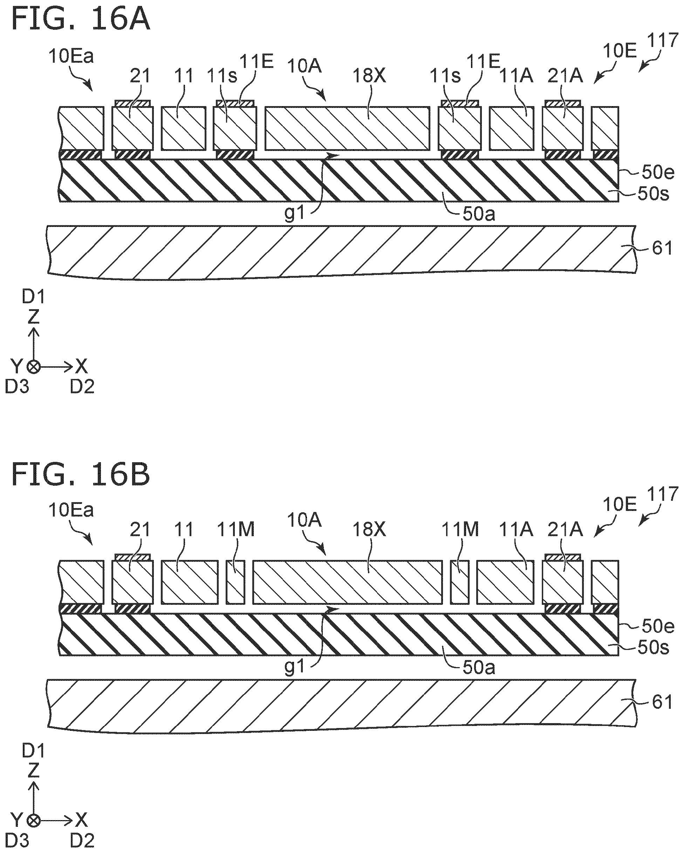

FIGS. 16A and 16B are schematic cross-sectional views illustrating a part of the sensor according to the first embodiment.

FIG. 16A is a cross-sectional view taken along the line A1-A2 in FIG. 15A. FIG. 16B is a cross-sectional view taken along the line A3-A4 in FIG. 15A.

As shown in FIG. 14, in a sensor 117 according to the embodiment, a shape of the first sensor part 10Ea is different from the shape of the first sensor part 10Ea in the sensor 110, etc. Except for this, the configuration of the sensor 117 may be the same as the configuration of the sensor 110, etc.

As shown in FIG. 15A, in the sensor 117, the first sensor part 10Ea includes the first support portion 11s, the first movable portion 10A, and the first fixed electrode 21. As shown in FIG. 16A, the first support portion 11s is fixed to the first region 50a of the sensor base 50s. The first movable portion 10A is supported by the first support portion 11s. The first fixed electrode 21 is fixed to the first region 50a. The first gap g1 is provided between the first region 50a and the first movable portion 10A.

The first movable portion 10A includes the first movable electrode 11. The first movable electrode 11 faces the first fixed electrode 21 in the second direction D2. In the sensor 117, the first signal generated between the first movable electrode 11 and the first fixed electrode 21 also changes in response to the acceleration applied to the sensor section 10E. For example, the first signal generated between the first movable electrode 11 and the first fixed electrode 21 may correspond to a change in the distance between the first movable electrode 11 and the first fixed electrode 21. The first signal may correspond to a change in the electrostatic capacitance between the first movable electrode 11 and the first fixed electrode 21.

In the sensor 117, the first movable portion 10A includes the first movable component 18X. A part of the first movable component 18X becomes the first movable electrode 11. In this example, the first movable portion 10A includes the first beam 11M. The first beam 11M is supported by the first support portion 11s. The first beam 11M supports the first movable component 18X. The first beam 11M extends along the third direction D3.

For example, the acceleration including a component in the second direction D2 is applied to the sensor section 10E. The applied acceleration displaces the first movable component 18X. The displacement includes a component along the second direction D2. The displacement changes the distance between the first movable electrode 11 and the first fixed electrode 21. The change in distance is detected. For example, the acceleration is detected by detecting a change in the electrostatic capacitance between the first movable electrode 11 and the first fixed electrode 21.

In this example, a plurality of first support portions 11s are provided, and a plurality of first beams 11M are provided. A part of one of the plurality of first beams 11M is supported by one of the plurality of first support portions 11s. Another part of each of the plurality of first beams 11M is connected to the first movable component 18X.

In this example, the first sensor part 10Ea further includes the first opposing fixed electrode 21A. The first movable component 18X is between the first fixed electrode 21 and the first opposing fixed electrode 21A in the second direction D2. A part of the first movable component 18X may be the first opposing movable electrode 11A. The first opposing movable electrode 11A faces the first opposing fixed electrode 21A in the second direction D2.

A first other signal generated between the first opposing movable electrode 11A and the first opposing fixed electrode 21A may change according to acceleration.

As shown in FIG. 15B, the first movable portion electrode 11E may be provided on the first movable portion 10A. The first movable portion electrode 11E is electrically connected to the first movable electrode 11 and the first opposing movable electrode 11A.

A controller 70 may be provided. The controller 70 may be electrically connected to the first movable portion electrode 11E, the first fixed electrode 21, and the first opposing fixed electrode 21A. The controller 70 may be configured to detect the first signal generated between the first movable electrode 11 and the first fixed electrode 21. The controller 70 may be configured to detect a first other signal generated between the first opposing movable electrode 11A and the first opposing fixed electrode 21A. A value corresponding to the difference between the first signal and the first other signal may be detected.

Thus, the first movable portion 10A may further include the first beam 11M. A part of the first beam 11M is connected to the first support portion 11s. Another part of the first beam 11M is connected to the first movable electrode 11. The first beam 11M extends along a third direction D3. The third direction D3 crosses a plane including the first direction D1 and the second direction D2.

The first sensor part 10Ea may further include the first opposing fixed electrode 21A fixed to the first region 50a. The first movable portion 10A may further include the first opposing movable electrode 11A. The first opposing movable electrode 11A faces the first opposing fixed electrode 21A in the second direction D2. The first movable electrode 11 is between the first fixed electrode 21 and the first opposing fixed electrode 21A. The first opposing movable electrode 11A is between the first movable electrode 11 and the first opposing fixed electrode 21A.

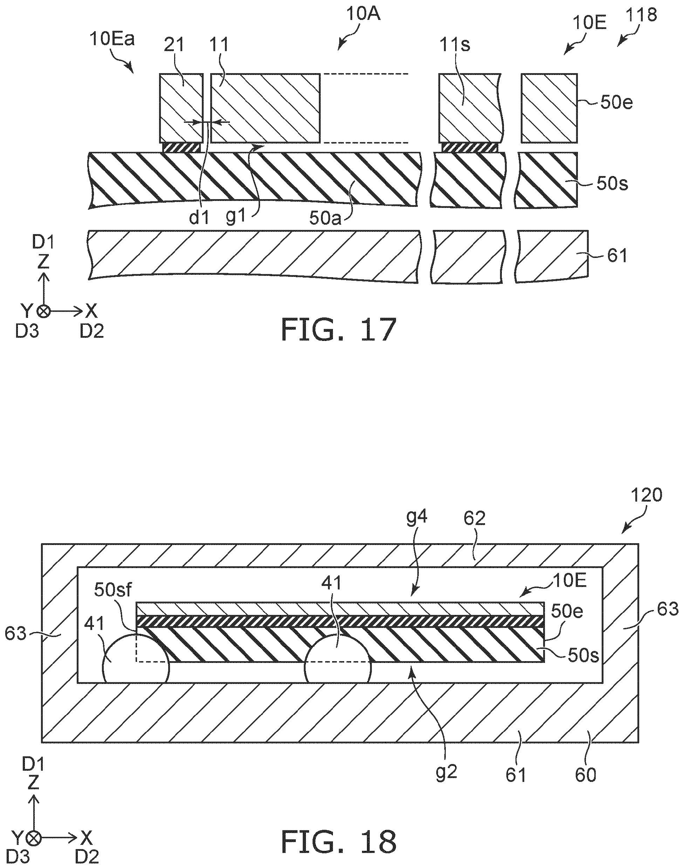

FIG. 17 is a schematic cross-section illustrating a sensor according to the first embodiment.

As shown in FIG. 17, in a sensor 118 according to the embodiment, the first sensor part 10Ea includes the first support portion 11s, the first movable portion 10A, and the first fixed electrode 21. The first movable portion 10A may include the first movable electrode 11. In the sensor 118, the displacement of the first movable portion 10A based on acceleration is detected. For example, the first sensor part 10Ea may be configured to detect a value corresponding to the displacement of the first movable portion 10A corresponding to the acceleration received by the sensor section 10E. The acceleration may be detected by detecting a value corresponding to the displacement of the first movable portion 10A. The displacement of the first movable portion 10A may be detected optically or electrically. For example, a value corresponding to a change in the distance between the first movable electrode 11 and the first fixed electrode 21 corresponding to the acceleration may be detected. Thereby, the acceleration may be detected. The change in distance may correspond to, for example, a change in electrostatic capacitance between the first movable electrode 11 and the first fixed electrode 21. For example, a component in a direction crossing the first direction D1 that is included in the acceleration may be detected.

FIG. 18 is a schematic cross-sectional view illustrating a sensor according to the first embodiment.

As shown in FIG. 18, in a sensor 120 according to the embodiment, the mounting member 60 includes a second mounting portion 62 and a side portion 63 in addition to the first mounting portion 61. Except for this, the configuration of the sensor 120 may be the same as the configuration of the sensors 110 to 116.

The sensor section 10E is provided between the first mounting portion 61 and the second mounting portion 62. A fourth gap g4 is provided between the sensor section 10E and the second mounting portion 62. The side portion 63 is provided around the sensor section 10E in a plane (X-Y plane) that crosses the direction (first direction D1) from the first mounting portion 61 to the second mounting portion 62. For example, the sensor section 10E is provided in a space inside the mounting member 60. For example, the space may be reduced in pressure. For example, the air pressure in the space is lower than 1 atmosphere. The influences of heat from the outside can be suppressed. Higher accuracy of detection is possible.

In the embodiment, the sensor base 50s may include, for example, silicon. At least a part of the first intermediate layer 51i and the second intermediate layer 52i may include an insulating material (for example, silicon oxide, etc.). The first movable portion 10A and the second movable portion 10B may include silicon, etc. The mounting member 60 may include, for example, ceramics. The ceramics include, for example, aluminum oxide. The fixing member 41 may include, for example, a conductive material. The conductive material may include a conductive resin. The conductive resin includes, for example, a plurality of conductive particles and a resin around the plurality of conductive particles. The plurality of conductive particles may include, for example, at least one selected from the group consisting of Ag particles and Au particles. The resin may include at least one selected from the group consisting of an epoxy-based resin and a silicone-based resin.

### (Second Embodiment)

The second embodiment relates to an electronic device.

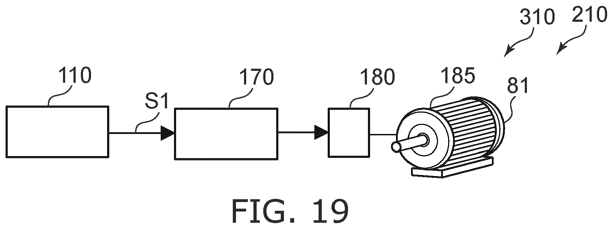

FIG. 19 is a schematic diagram illustrating an electronic device according to the second embodiment.

As shown in FIG. 19, an electronic device 310 according to the embodiment includes the sensor according to the first embodiment and a circuit controller 170. In the example of FIG. 19, the sensor 110 is drawn as the sensor. The circuit controller 170 is configured to control a circuit 180 based on a signal S1 obtained from the sensor. The circuit 180 is, for example, a control circuit of a driving device 185 or the like. According to the embodiment, for example, the circuit 180 for controlling the driving device 185 can be controlled with high accuracy.

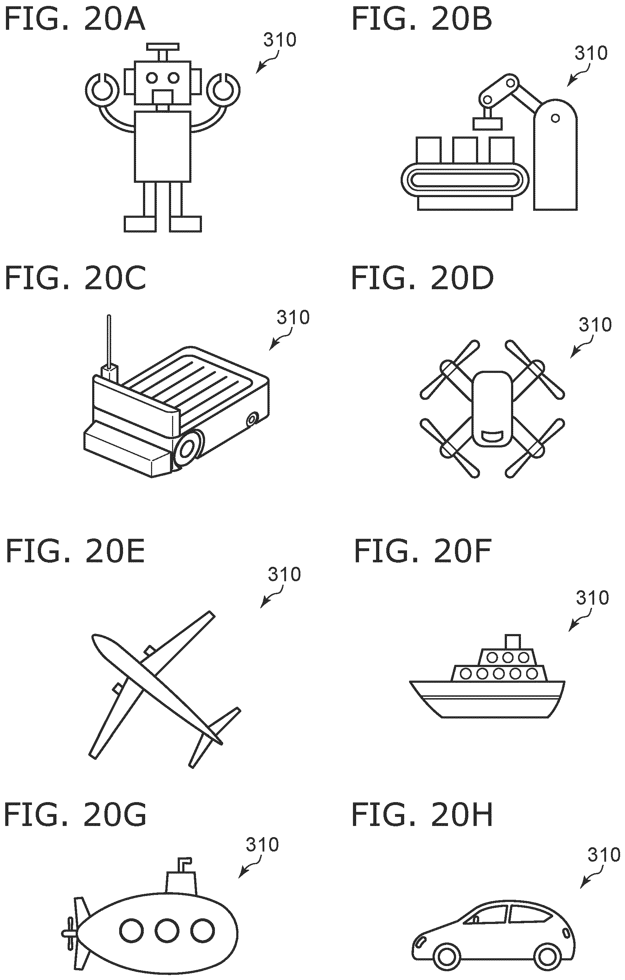

FIGS. 20A to 20H are schematic diagrams illustrating applications of the electronic device according to the embodiment.

As shown in FIG. 20A, the electronic device 310 may be at least a part of a robot. As shown in FIG. 20B, the electronic device 310 may be at least a part of a work robot provided in a manufacturing factory or the like. As shown in FIG. 20C, the electronic device 310 may be at least a part of an automated guided vehicle such as in a factory. As shown in FIG. 20D, the electronic device 310 may be at least a part of a drone (unmanned aerial vehicle). As shown in FIG. 20E, the electronic device 310 may be at least a part of an airplane. As shown in FIG. 20F, the electronic device 310 may be at least a part of a vessel. As shown in FIG. 20G, the electronic device 310 may be at least a part of a submarine. As shown in FIG. 20H, the electronic device 310 may be at least a part of an automobile. The electronic device 310 may include, for example, at least one of a robot or a mobile object.

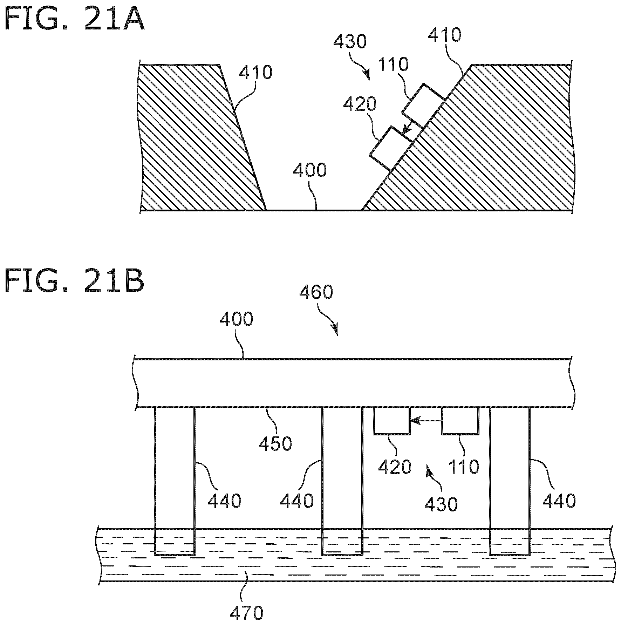

FIGS. 21A and 21B are schematic diagrams illustrating applications of the sensor according to the embodiment.

As shown in FIG. 21A, a sensor 430 according to the embodiment includes the sensor according to the first embodiment and a transmitter/receiver 420. In the example of FIG. 21A, the sensor 110 is drawn as the sensor. The transmitter/receiver 420 is configured to transmit the signal obtained from the sensor 110 by at least one of wireless or wired methods, for example. The sensor 430 is provided, for example, on a slope surface 410 such as a road 400. The sensor 430 may, for example, monitor conditions such as facilities (e.g., infrastructure). The sensor 430 may be, for example, a condition monitoring device.

For example, the sensor 430 detects changes in the state of the slope surface 410 of the road 400 with high accuracy. A change in the state of the slope surface 410 includes, for example, at least one of a change in tilt angle or a change in vibration state. The signal (test result) obtained from the sensor 110 is transmitted by the transmitter/receiver 420. The condition of facilities (e.g., infrastructure) can be monitored, e.g., continuously.

As shown in FIG. 21B, the sensor 430 is provided on a part of a bridge 460, for example. The bridge 460 is provided over a river 470. For example, the bridge 460 includes at least one of main girder 450 and a bridge pier 440. The sensor 430 is provided on at least one of the main girder 450 and the bridge pier 440. For example, the angle of at least one of the main girder 450 and the bridge pier 440 may change due to deterioration or the like. For example, in at least one of the main girder 450 and the bridge pier 440, the vibration state may change. The sensor 430 detects these changes with high accuracy. A detection result can be transmitted to an arbitrary place by the transmitter/receiver 420. Anomalies can be effectively detected.

The embodiments include the following Technical proposals:
(Technical proposal 1) A sensor, comprising:
   a mounting member including a first mounting portion;
   a sensor section including a sensor base and a first sensor part, the sensor base including a first region, a second region, and a first end, the first region being between the second region and the first end, the first sensor part including a first support portion fixed to the first region, a first movable portion supported by the first support portion, and a first fixed electrode fixed to the first region, a first gap being provided between the first region and the first movable portion; and
   a fixing member fixing the second region to the first mounting portion,
   the first end being a free end.
(Technical proposal 2) The sensor according to Technical proposal 1, wherein
   a second gap is provided between the first mounting portion and the first region.
(Technical proposal 3) The sensor according to Technical proposal 2, wherein
   a second direction from the first region to the first end crosses a first direction from the first region to the first support portion.
(Technical proposal 4) The sensor according to Technical proposal 3, wherein
   the first movable portion includes a first movable electrode, and
   the first movable electrode faces the first fixed electrode in the second direction.
(Technical proposal 5) The sensor according to Technical proposal 4, wherein
   a first signal generated between the first movable electrode and the first fixed electrode is configured to change according to an acceleration applied to the sensor section.
(Technical proposal 6) The sensor according to Technical proposal 4, wherein
   the first movable portion further includes a first movable base, a second movable base, and a first beam,
   a part of the first beam is connected to the first movable base,
   another part of the first beam is connected to the second movable base,
   the first beam extends along a third direction,
   the third direction crosses a plane including the first direction and the second direction, and
   the first movable electrode is connected to the first beam.
(Technical proposal 7) The sensor according to Technical proposal 6, wherein
   the first sensor part further includes a second fixed electrode fixed to the first region,
   the first movable portion further includes a second movable electrode,
   the second movable electrode faces the second fixed electrode in the second direction,
   the first movable portion further includes a second other movable base and a second beam,
   a part of the second beam is connected to the second other movable base,
   another part of the second beam is connected to the first movable base,
   the second beam extends along the third direction,
   the second movable electrode is connected to the second beam, and
   a first resonant frequency of the first beam and a second resonant frequency of the second beam are configured to change according to an acceleration applied to the sensor section.
(Technical proposal 8) The sensor according to any one of Technical proposals 3-7, wherein
   a first change rate of a first curvature of the first region in the second direction with respect to temperature is lower than a second change rate of a second curvature of the second region in the second direction with respect to the temperature.
(Technical proposal 9) The sensor according to any one of Technical proposals 3-8, wherein
   a part of the fixing member is provided between the first mounting portion and the second region, and
   another part of the fixing member does not overlap the second region.
(Technical proposal 10) The sensor according to any one of Technical proposals 3-8, wherein
   the second region includes a first side face crossing a plane crossing the first direction, and
   the fixing member contacts the first side face.
(Technical proposal 11) The sensor according to any one of technical proposals 3-8, wherein
   the fixing member is provided between the first mounting portion and the second region.
(Technical proposal 12) The sensor according to any one of Technical proposals 3-8, wherein
   a plurality of the fixing members are provided, and
   a direction from one of the plurality of fixing members to another one of the plurality of fixing members crosses the first direction and crosses the second direction.
(Technical proposal 13) The sensor according to any one of technical proposals 3-8, wherein
   a plurality of the fixing members are provided, and
   a direction from one of the plurality of fixing members to another one of the plurality of fixing members crosses the first direction and is along the second direction.
(Technical proposal 14) The sensor according to any one of Technical proposals 3-8, wherein
   the sensor base further includes a second end,
   a direction from the second end to the first region crosses a plane including the first direction and the second direction, and
   the second end is a free end.
(Technical proposal 15) The sensor according to Technical proposal 14, wherein
   the sensor section further includes a second sensor part,
   the second sensor part includes:
      a second support portion fixed to the first region;
      a second movable portion supported by the second support portion; and
      a second fixed electrode fixed to the first region, and
   a part of the first gap is provided between the first region and the second movable portion.
(Technical proposal 16) The sensor according to any one of Technical proposals 2-6, wherein
   the sensor base further includes a third region and a third end,
   the second region is between the third region and the first region,
   a direction from the third end to the third region is along a direction from the first region to the first end, and
   the third end is a free end.
(Technical proposal 17) The sensor according to Technical proposal 16, further comprising:
   a second sensor part,
   the second sensor part including:
      a second support portion fixed to the third region;
      a second movable portion supported by the second support portion; and
      a second fixed electrode fixed to the third region, and
   a third gap being provided between the third region and the second movable portion.
(Technical proposal 18) The sensor according to Technical proposal 4 or 5, wherein
   the first movable portion further includes a first beam,
   a part of the first beam is connected to the first support portion,
   another part of the first beam is connected to the first movable electrode,
   the first beam extends along a third direction, and
   the third direction crosses a plane including the first direction and the second direction.
(Technical proposal 19) The sensor according to Technical proposal 18, wherein
   the first sensor part further includes a first opposing fixed electrode fixed to the first region,
   the first movable portion further includes a first opposing movable electrode,
   the first opposing movable electrode faces the first opposing fixed electrode in the second direction,
   the first movable electrode is between the first fixed electrode and the first opposing fixed electrode, and
   the first opposing movable electrode is between the first movable electrode and the first opposing fixed electrode.
(Technical proposal 20) An electronic device comprising:
   the sensor according to any one of Technical proposals 1-19; and
   a circuit controller configured to control a circuit based on a signal obtained from the sensor.

According to the embodiments, a sensor and an electronic device that can improve performance.

Hereinabove, exemplary embodiments of the invention are described with reference to specific examples. However, the embodiments of the invention are not limited to these specific examples. For example, one skilled in the art may similarly practice the invention by appropriately selecting specific configurations of components included in sensors such as mounting members, sensor sections, sensor bases, support portions, fixed electrodes, movable portions, fixed members, controllers, etc., from known art. Such practice is included in the scope of the invention to the extent that similar effects thereto are obtained.

Further, any two or more components of the specific examples may be combined within the extent of technical feasibility and are included in the scope of the invention to the extent that the purport of the invention is included.

Moreover, all sensors and all electronic devices practicable by an appropriate design modification by one skilled in the art based on the sensors and the electronic devices described above as embodiments of the invention also are within the scope of the invention to the extent that the purport of the invention is included.

Various other variations and modifications can be conceived by those skilled in the art within the spirit of the invention, and it is understood that such variations and modifications are also encompassed within the scope of the invention.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the invention as defined by the appended claims.

## Claims

1. A sensor, comprising:
a mounting member including a first mounting portion;
a sensor section including a sensor base and a first sensor part, the sensor base including a first region, a second region, and a first end, the first region being between the second region and the first end, the first sensor part including a first support portion fixed to the first region, a first movable portion supported by the first support portion, and a first fixed electrode fixed to the first region, a first gap being provided between the first region and the first movable portion; and
a fixing member fixing the second region to the first mounting portion,
the first end being a free end.

2. The sensor according to claim 1, wherein
a second gap is provided between the first mounting portion and the first region.

3. The sensor according to claim 2, wherein
a second direction from the first region to the first end crosses a first direction from the first region to the first support portion.

4. The sensor according to claim 3, wherein
the first movable portion includes a first movable electrode, and
the first movable electrode faces the first fixed electrode in the second direction.

5. The sensor according to claim 4, wherein
a first signal generated between the first movable electrode and the first fixed electrode is configured to change according to an acceleration applied to the sensor section.

6. The sensor according to claim 4, wherein
the first movable portion further includes a first movable base, a second movable base, and a first beam,
a part of the first beam is connected to the first movable base,
another part of the first beam is connected to the second movable base,
the first beam extends along a third direction,
the third direction crosses a plane including the first direction and the second direction, and
the first movable electrode is connected to the first beam.

7. The sensor according to claim 6, wherein
the first sensor part further includes a second fixed electrode fixed to the first region,
the first movable portion further includes a second movable electrode,
the second movable electrode faces the second fixed electrode in the second direction,
the first movable portion further includes a second other movable base and a second beam,
a part of the second beam is connected to the second other movable base,
another part of the second beam is connected to the first movable base,
the second beam extends along the third direction,
the second movable electrode is connected to the second beam, and
a first resonant frequency of the first beam and a second resonant frequency of the second beam are configured to change according to an acceleration applied to the sensor section.

8. The sensor according to any one of claims 3-7, wherein
a first change rate of a first curvature of the first region in the second direction with respect to temperature is lower than a second change rate of a second curvature of the second region in the second direction with respect to the temperature.

9. The sensor according to any one of claims 3-8, wherein
a part of the fixing member is provided between the first mounting portion and the second region, and
another part of the fixing member does not overlap the second region.

10. The sensor according to any one of claims 3-8, wherein
the second region includes a first side face crossing a plane crossing the first direction, and
the fixing member contacts the first side face.

11. The sensor according to any one of claims 3-8, wherein
the fixing member is provided between the first mounting portion and the second region.

12. The sensor according to any one of claims 3-6, wherein
the sensor base further includes a second end,
a direction from the second end to the first region crosses a plane including the first direction and the second direction, and
the second end is a free end.

13. The sensor according to claim 12, wherein
the sensor section further includes a second sensor part,
the second sensor part includes:
a second support portion fixed to the first region;
a second movable portion supported by the second support portion; and
a second fixed electrode fixed to the first region, and
a part of the first gap is provided between the first region and the second movable portion.

14. The sensor according to claim 4 or 5, wherein
the first movable portion further includes a first beam,
a part of the first beam is connected to the first support portion,
another part of the first beam is connected to the first movable electrode,
the first beam extends along a third direction,
the third direction crosses a plane including the first direction and the second direction,
the first sensor part further includes a first opposing fixed electrode fixed to the first region,
the first movable portion further includes a first opposing movable electrode,
the first opposing movable electrode faces the first opposing fixed electrode in the second direction,
the first movable electrode is between the first fixed electrode and the first opposing fixed electrode, and
the first opposing movable electrode is between the first movable electrode and the first opposing fixed electrode.

15. An electronic device comprising:
the sensor according to claim 1; and
a circuit controller configured to control a circuit based on a signal obtained from the sensor.
